(19)

**Europäisches Patentamt**
**European Patent Office**
**Office européen des brevets**

(11)  **EP 2 691 759 B1**

(12) **EUROPEAN PATENT SPECIFICATION**

(45) Date of publication and mention
of the grant of the patent:
**31.05.2023 Bulletin 2023/22**

(21) Application number: **12776025.4**

(22) Date of filing: **27.04.2012**

(51) International Patent Classification (IPC):
**G01N 21/00** *(2006.01)*    **G01N 21/88** *(2006.01)*
**G01N 21/84** *(2006.01)*    **H04N 5/225** *(2006.01)*

(52) Cooperative Patent Classification (CPC):
**G01N 21/8483; G01N 21/8806;** G01N 2201/062

(86) International application number:
**PCT/US2012/035346**

(87) International publication number:
**WO 2012/149243 (01.11.2012 Gazette 2012/44)**

(54) **HIGH FLUX COLLIMATED ILLUMINATOR AND METHOD OF UNIFORM FIELD ILLUMINATION**

MIT HOHER FLUSSDICHTE KOLLIMIERTE LICHTQUELLE UND VERFAHREN FÜR
GLEICHMÄSSIGE FELDBELEUCHTUNG

DISPOSITIF D'ÉCLAIRAGE À HAUT DEGRÉ DE COLLIMATION DU FLUX ET PROCÉDÉ
D'ÉCLAIRAGE UNIFORME DU CHAMP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2011 US 201161480426 P**

(43) Date of publication of application:
**05.02.2014 Bulletin 2014/06**

(73) Proprietor: **Siemens Healthcare Diagnostics Inc.
Tarrytown, NY 10591-5098 (US)**

(72) Inventor: **JASPERSE, Jeffrey, R.
West Newton
MA 02465 (US)**

(74) Representative: **Schweitzer, Klaus et al
Plate Schweitzer Zounek
Patentanwälte
Rheingaustrasse 196
65203 Wiesbaden (DE)**

(56) References cited:
EP-A1- 1 566 629          WO-A1-2008/130643
WO-A1-2010/059537     KR-A- 20040 056 822
US-A- 5 461 417            US-A- 5 717 485
US-A- 5 877 863            US-A1- 2004 114 035
US-A1- 2007 014 466     US-A1- 2010 225 929
US-A1- 2010 239 137     US-B2- 7 852 481

• SHREE K NAYAR ET AL: "Subspace Methods for
Robot Vision", IEEE TRANSACTIONS ON
ROBOTICS AND AUTOMATION, IEEE INC, NEW
YORK, US, vol. 12, no. 5, 1 October 1996
(1996-10-01), XP011053150, ISSN: 1042-296X

**Description**

FIELD OF INVENTIVE CONCEPTS

The inventive concepts disclosed herein relate to uniform illumination of a target to be imaged, and more specifically, but not by way of limitation, to illumination and optical analysis of reagent test pads for medical diagnostics.

BACKGROUND

The variation induced in an image of a target illuminated in small areas of inspection can typically vary from 25% to 35% or more. This is primarily caused by the camera taking lens vignetting properties know as cos 4th law and lens shading which causes light fall off across the field of view. The problem is worst at the periphery of the lens and manifests as darker areas at the edges of the resulting image.

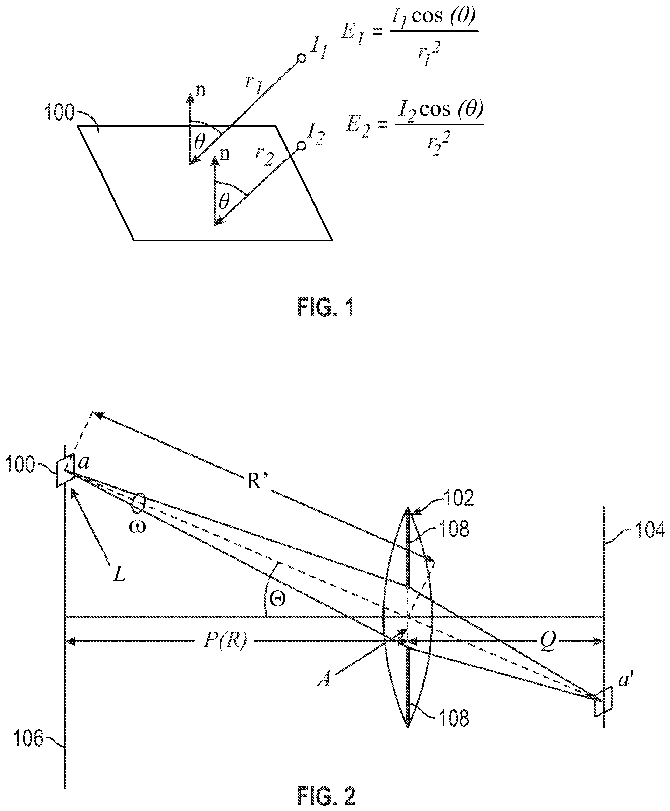

Referring now to Figures 1 and 2, when a light source has multiple sources spaced at different distances relative to an object surface 100, the illumination on the subject surface 100 falls off proportional to $1/r^2$. The light fall off can cause optical vignetting. More specifically, optical vignetting is caused by a lens element 102 farther from the image plane 104 shading an element closer to the image plane 104 for off axis incident rays in multiple lens 102 element systems. In Figure 2, the image plane 104 is shown parallel to an object plane 106, the lens element 102 is shown as having an aperture stop 108, the letter L stands for Luminance, and the letter A stands for Pupil Area of the lens element 102.

Natural vignetting cosine[4] law: $\dfrac{E_\Theta}{E_o} = \cos^4 \Theta$ , where:

Intensity $I = La_P$, $a_P = a\cos\Theta$, Luminous flux $\Phi = \dfrac{LaA\cos^4 \Theta}{R^2}$ , $E = \dfrac{\Phi}{a'}$ ,

$$E = \frac{LP^2 A \cos^4 \Theta}{R^2 Q^2} , \quad \omega = \frac{A \cos^3 \Theta}{R^2} , \quad \Phi = I\omega , \quad R' = \frac{R}{\cos \Theta} , \quad a' = \frac{aQ^2}{P^2}$$

The problem of vignetting and image distortion is especially problematic in the field of laboratory diagnostics where reagent test paper is often optically examined to determine the concentration of an analyte in a bodily fluid sample.

Reagent test strips are widely used in the field of clinical chemistry. A test strip usually has one or more test areas, and each test area is capable of undergoing a color change in response to contact with a liquid specimen. The liquid specimen usually contains one or more constituents or properties of interest. The presence and concentrations of these constituents of interest in the specimen are determinable by an analysis of the color changes undergone by the test strip. Usually, this analysis involves a color comparison between the test area or test pad and a color standard or scale. In this way, reagent test strips assist physicians in diagnosing the existence of diseases and other health problems.

Color comparisons made with the naked eye can lead to imprecise measurement. For this reason, a reflectance spectroscope is commonly used to analyze samples of body fluid. A conventional spectrophotometer determines the color of a urine sample disposed on a white, non-reactive pad by illuminating the pad and taking a number of reflectance readings from the pad, each having a magnitude relating to a different wavelength of visible light. Today, strip reading instruments employ a variety of area array detection readheads utilizing CCD (charge-coupled device), CID (charge-injection device), PMOS, or CMOS detection structures for detecting color changes to the test strips. The color of the urine on the pad may then be determined based upon the relative magnitudes of red, green, and blue reflectance signals.

Conventional spectrophotometers may be used to perform a number of different urinalysis tests utilizing a reagent strip on which a number of different reagent pads are disposed. Each reagent pad is provided with a different reagent which causes a color change in response to the presence of a certain type of constituent in urine such as leukocytes (white blood cells) or red blood cells. Typical analytes of interest for urine include glucose, blood, bilirubin, urobilinogen, nitrite, protein, and ketone bodies. After adding color-developing reagents to urine, the foregoing analytes of interest have the following colors: glucose is bluish green; bilirubin, urobilinogen, nitrite, and ketone bodies are green; and blood and protein are red. The color developed in a particular analyte defines the characteristic discrete spectrum for absorption of light for that particular analyte. For example, the characteristic absorption spectrum for color-developed glucose falls within the upper end of the blue spectrum and the lower end of the green spectrum. Reagent strips may have ten different types of reagent pads.

For example, to detect on immunotest strips or chemistry test strips the presence of blood in a person's urine, conventional reflectance spectroscopes have been used to detect the presence of blood in a urine sample disposed on a reagent pad. Any blood present in the urine reacts with the reagent on the reagent pad, causing the reagent pad to change color to an extent which depends on the concentration of the blood. For example, in the presence of a relatively large concentration of blood, such a reagent pad may change in color from yellow to dark green. It is known in the art is a chemistry strip reader that includes a light source for sequentially illuminating a chemistry strip, wherein images of each strip are captured at different discrete times (WO 2008/130643 A1). The light source comprises rows of LEDs of alternating colors, such as alternating red, green and blue LEDs. According to WO 2008/130643 in order to provide better uniformity of illumination for each of the color, the relative positioning of the colored LEDs is alternated.

A conventional reflectance spectroscope detects the concentration of the blood by illuminating the reagent pad and detecting, via a conventional reflectance detector, the amount of light received from the reagent pad, which is related to the color of the reagent pad. Based upon the magnitude of the reflectance signal generated by the reflectance detector, the spectroscope assigns the urine sample to one of a number of categories, e.g., a first category corresponding to no blood, a second category corresponding to a small blood concentration, a third category corresponding to a medium blood concentration, and a fourth category corresponding to a large blood concentration.

In one type of prior art reflectance spectroscope an optical system in the form of a readhead is used in which a light bulb is disposed directly above the reagent pad to be tested and a reflectance detector is disposed at a 45 degree angle to the horizontal surface of the reagent pad. Light passes through a first vertical optical path from the illumination source to the reagent pad and through a second optical path, disposed 45 degrees with respect to the first optical path, from the reagent pad to the reflectance detector.

Other devices have been designed to illuminate a reagent pad. For example, U.S. Pat. No. 4,755,058 to Shaffer discloses a device for illuminating a surface and detecting the intensity of light emitted from the surface. The surface is directly illuminated by a plurality of light-emitting diodes disposed at an acute angle relative to the surface. U.S. Pat. No. 5,518,689 to Dosmann, et al. discloses a diffused light reflectance readhead in which one or more light-emitting diodes are used to illuminate a reagent pad and in which light from the reagent pad is detected by a light sensor.

Many reflectometer machines are small enough and inexpensive enough to be usable in physician offices and smaller laboratories, for example, and therefore are able to provide individual doctors, nurses and other caregivers with powerful medical diagnostic tools. For example, U.S. Pat. No. 5,654,803 discloses an optical inspection machine for determining non-hemolyzed levels of occult blood in urine using reflectance spectroscopy. The machine is provided with a light source for successively illuminating a plurality of different portions of a reagent pad on which a urine sample is disposed, and a detector array for detecting light received from the reagent pad and generating a plurality of reflectance signals in response to light received from a corresponding one of the different portions of the reagent pad. The machine is also provided with means for determining whether the magnitude of one of the reflectance signals is substantially different than the magnitude of another of the reflectance signals. Where the body-fluid sample is urine, this capability allows the machine to detect the presence of non-hemolyzed levels of occult blood in the urine sample. Also known in the art is a light intensity adjustment system which greatly decreases or makes unnecessary image compensation by the image processing device, improves scan precision, and reduces scan time (EP 1 566 629 A1).

U.S. Pat. No. 5,877,863 shows an optical inspection machine for inspecting a liquid sample, such as urine, using reflectance spectroscopy. The machine includes a readhead for illuminating a target area substantially uniformly via only a single light-emitting diode and receiving light from the target area so that reagent tests may be performed. The readhead is provided with a housing, first and second light sources mounted in a fixed position relative to the housing, a light guide mounted to receive light from each of the light sources which conveys, when only one of the light sources is illuminated, substantially all of the light from the light source to illuminate a target area substantially uniformly, and a light detector coupled to receive light from the target area. Each of the first and second light sources is composed of only a single light-emitting diode for emitting substantially monochromatic light of a different wavelength. A readhead for a photometric diagnostic instrument for illuminating a target area and detecting color information from the target area is further disclosed in the WO 2010/059537 A1.

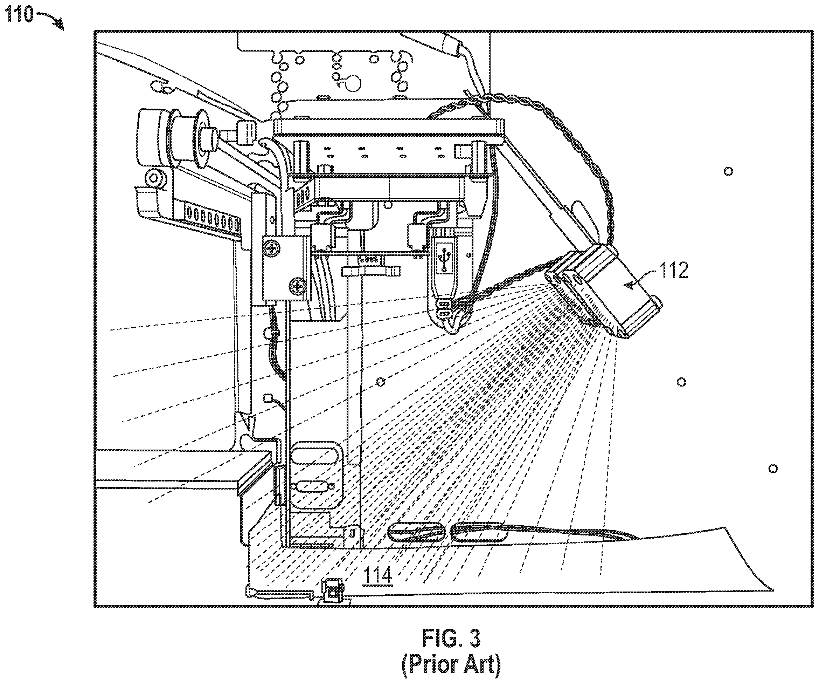

Digital vignetting correction in digital CMOS imagers has been used to help improve the appearance of resulting images. However, dynamic range is often lost as a consequence. Figure 3 shows a prior art illumination system 110. As can be seen, stadium style lighting 112 will cause light fall off and vignetting because of the way the stadium style lighting 112 is positioned relative to a target 114. In fact, in testing, the prior art illumination system 110 provided no better than 45% uniformity when the digital vignetting correction was turned off in the camera-chip.

Therefore, there is a need in the art for an illumination system and method that corrects for light fall off and image vignetting without resorting to digital correction so that the dynamic range can be maintained. The system should evenly illuminate an object to be photographed by a digital or analog camera system, and correct for the light fall off caused by the lens system's optical and mechanical vignetting properties known as cos4th law and lens shading. The need for vignetting correction in the camera algorithms should be eliminated, and by doing so, recover dynamic range otherwise lost by digital correction when applied. Applications include inspection of components (machine vision), processes control, medical sample imaging, reagent imaging. Specifically, there is a need for a close range illumination and optical system.

SUMMARY

Briefly, in accordance with the invention defined in claims 1 and 6 these and other objects are attained by providing a new and improved illumination system having at least two light sources which have adjustable luminous flux outputs. The illumination system includes a processor for adjusting the flux output of one or both of said at least two light sources to compensate for any non-uniform illumination on a target area caused by the discrepancy in distances of the individual light sources to the target area on account of a tilt angle.

The illumination system according to the present invention comprises a new and improved High Flux Collimated Illuminator ("HFCI") which compensates for the light fall off by uniquely shaping the light flux and resulting illumination pattern on the target to be imaged. An upper and lower bank of LEDs are wired in separate control channels allowing for different lumens output in the upper and lower output illumination field, allowing further improvement in uniformity to be achieved relative to the tilt angle that causes the upper output sources to be farther from the target than the lower output sources.

Additional features and advantages of the inventive concepts disclosed herein will be made apparent from the following detailed description of illustrative embodiments that proceeds with reference to the accompanying drawings.

BRIEF DESCRIPTION OF THE DRAWINGS

A more complete appreciation of the inventive concepts disclosed herein and many of the attendant advantages thereof will be readily understood by reference to the following detailed description when taken in conjunction with the accompanying drawings, in which:

Figure 1 shows illumination of a surface with multiple sources at different distances and the light fall off relationship to tilt angle ($1/r^2$) and the distance of light sources to target.
Figure 2 shows relationship of light fall off to cos 4th vignetting.
Figure 3 shows a prior art illumination system.
Figures 4A and 4B show an embodiment of the new and improved HFCI.
Figure 5 shows one embodiment of the new and improved HFCI as part of an optical analysis system.
Figures 6 and 7 illustrate one embodiment of HFCI utilization in an optical analysis system to improve illumination uniformity.
Figure 8 illustrates a utilization of HFCI to evenly illuminate a reagent card.
Figure 9 illustrates an example of a method and computer code instructions for imaging a target according to an embodiment of the inventive concepts disclosed herein.
Figure 10 illustrates an example of a method and computer code instructions for RGB uniformity check according to an embodiment of the inventive concepts disclosed herein.

DESCRIPTION OF THE PREFERRED EMBODIMENTS

Referring now to the drawings in which like reference characters designate identical or corresponding parts throughout the several views, a preferred embodiment of the inventive concepts disclosed herein will now be described with reference to Figures 1-10.

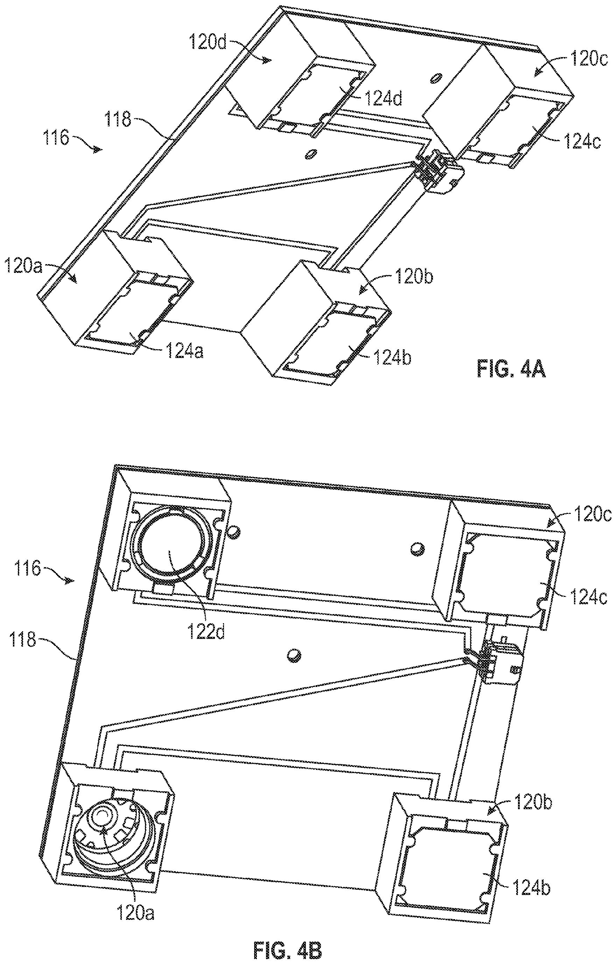

Referring now to Figures 4A and 4B, a HFCI 116 according to one aspect of the inventive concepts disclosed herein is shown. The HFCI 116 includes a base plate 118 having at least two light sources 120a and 120b mounted apart from each other. The base plate 118 is preferably a printed circuit board and will be referred to hereinafter as the circuit board 118. In a preferred embodiment, the HFCI 116 includes at least four LEDs as light sources 120a-d, such as Lamina Atlas-11 NT2-42D1-0529 quad die available from Lighting Sciences Group Inc. The light sources 120a-d are mounted on opposite corners or sides of the base plate 118. Collimator lenses 122a-d are preferably mounted over the light sources 120a-d. Preferably, the light sources 120a-d are fitted with linear polarizers 124a-d to ensure that specular reflections are reduced especially for wetted targets. Additional mounting hardware can be used to keep all components aligned and secured in place. In a preferred embodiment, the circuit board 118 is arranged such that each of the light sources 120a-d can have its current independently adjusted. Usually a processor executing program logic would be used to adjust the current to each of the light sources 120a-d, as will be described in greater detail below.

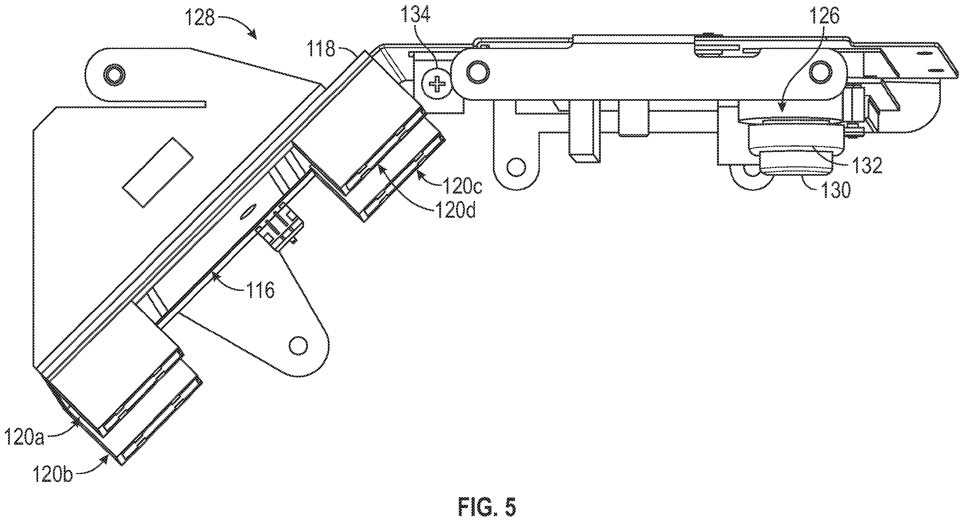

Referring now to Figure 5, the HFCI 116 according to the inventive concepts disclosed herein may be used in conjunction with a camera or other optical reader 126 to form an optical analysis system 128. The optical reader 126 may be any imager known in the art, but a CMOS imager, such as those sold by Micron, is preferred. Preferably, the optical reader 126 is fitted with a linear polarizer 130. The linear polarizers 130 placed in front of the imager lens 132 and illuminator 116 are rotated 90 degrees relative to each other. The optical reader 126 is generally positioned to be above the image target and the illuminator 116 is preferably positioned at a 45 degree angle to the image target, such as via using a camera PCB rotation adjustment mechanism 134.

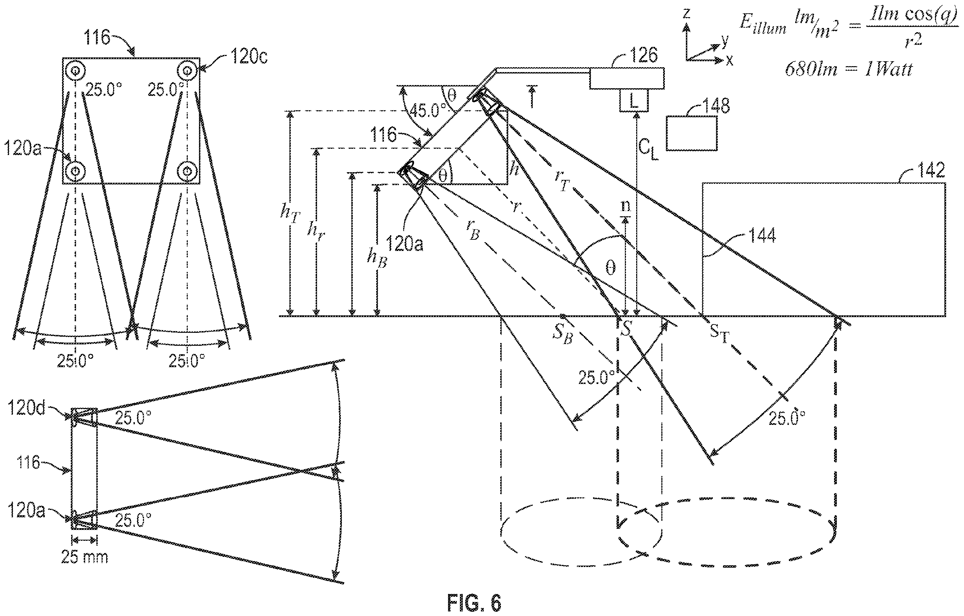

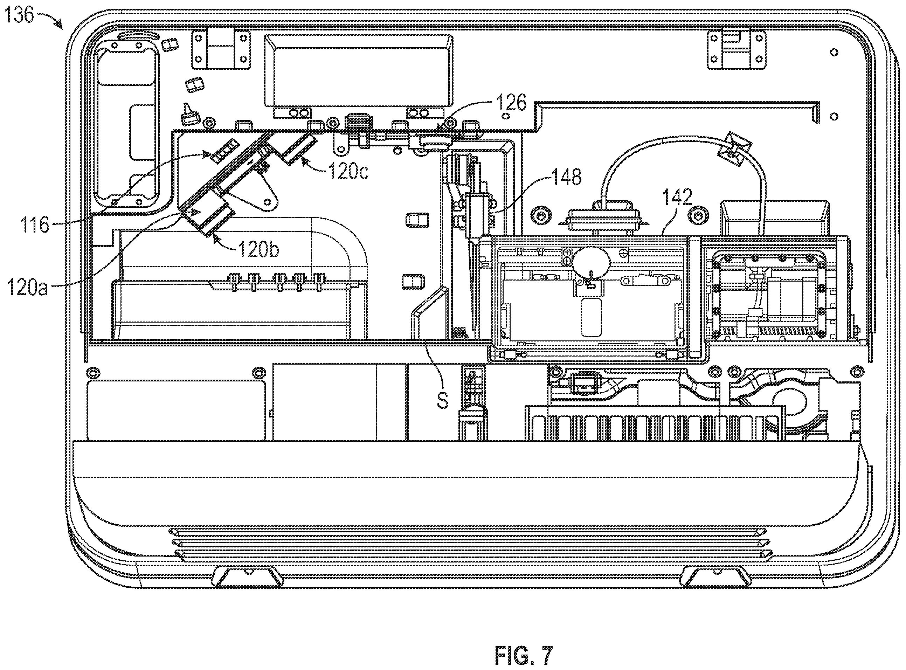

Referring now to Figures 6 and 7, an optical system 136 for reading a medical diagnostic reagent card 138 is shown. The optical system 136 has a target area S with a first surface point $S_T$ and a second surface point $S_B$. The optical reader 126 is aimed at the target area S. The illuminator 116 has at least a first light source 120a (e.g., a LED with a diameter of 20mm) aimed at the first surface point $S_T$ and is disposed a distance $R_T$ from the first surface point $S_T$. A second light source 120b is aimed at the second surface point $S_B$ and is disposed a distance $R_B$ from the second surface point $S_B$. Since the first distance Rr and second distances $R_B$ are not equal, the illumination at the first surface point $S_T$ and the second surface point $S_B$ on the target area S will not be uniform. As described above, this would generally result in a poor reading by the optical reader 126. According to the inventive concepts disclosed herein, the luminous flux of the first light source 120a and second light source 120b are either set or adjusted such that illumination at the first surface point $S_T$ is substantially equivalent to the illumination at the second surface point $S_B$. This can be done by adjusting the current to either one or both of the first light source 120a and the second light source 120b. The current adjustment can be preprogrammed or dynamically adjusted by a processor. As can be seen from Figures 6 and 7, the embodiment shown has four light sources 120a-d that are managed in the same manner as described with regards to the two above light sources 120a-b. It is understood that the inventive concepts disclosed herein can be utilized with any number of light sources 120a-n greater than two.

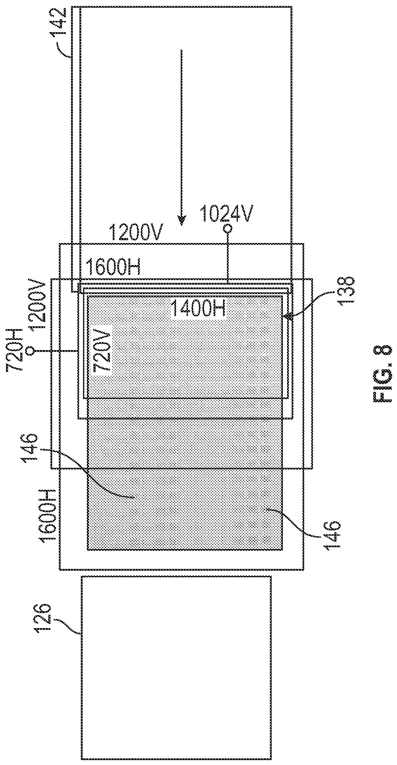

In the particular embodiment shown, the optical system 136 is a medical diagnostic device that reads reagent cards 138 shown in Figure 8. The reagent cards 138 are stored in a stack 140 in the reagent box 142, and are incrementally advanced one card 138 at a time past a moisture protection gate 144. Once past the moisture protection gate 144, bodily fluid samples such as urine are deposited on each of the pads 146 on the reagent card 138, such as via a pipette boom 148. The device then advances the card 138 to the target area S of the optical analysis system 128 to be imaged.

It will also be understood to those skilled in the art that the operative method of the HFCI 116 described herein may be applied to other illuminators. More specifically, a method is disclosed for illuminating a target to reduce a vignette effect on a captured image of the target. This is accomplished by adjusting the luminous flux of the first light source 120a illuminating the first surface point $S_T$ of the target. The adjustment is made relative to the luminous flux of the second light source 120b illuminating the second surface point $S_B$ of the target S. The effect is to balance the illumination at the first and second surface points $S_T$ and $S_B$.

Generally, balancing the illumination from two different light sources 120a and 120b at two different points on the surface of the target S can be achieved by (a) Determining a distance $R_T$ between the first light source 120a and the first surface point $S_T$ of the target S along an optical axis of the first light source 120a; (b) Determining a distance $R_B$ between the second light source 120b and the second surface point $S_B$ of said target S along an optical axis of the second light source 120b; and (c) Increasing or decreasing the luminous flux of the first light source 120a such that illumination at the first surface point $S_T$ is substantially equivalent to the illumination at the second surface point $S_B$. It is understood to those skilled in the art that the relationship between the current and luminous flux is known or can be easily calculated for any given light source.

Example 1 - HFCI Performance

Utilizing the system setup shown in Figures 5-7, a Munsell N9.5 white color reference card 138 is placed in the target area S, imaged by the optical reader 126, and analyzed to produce the statistical results. The system had the following specifications:

Luminous flux output (before diffuser and polarizer) = 200 lm min / LED @700 mA;
Color temperature = 3050° K typical;
Forward voltage drop @ 700 mA = 8 VDC typical; and
Power = 4.9 Watts ea. typical @ 700 mA.

As can be seen from Table 1, the HFCI 116 achieves significantly better uniformity in the resulting image acquired by the optical reader 126 compared to other solutions available and investigated. Prototype performance achieves 10% variation in the Red and Green and 12% in the Blue spectral components of the white light produced by the LEDs, eliminating the need for image post-processing vignetting correction, recovering otherwise lost dynamic range. It does this by shaping the output of the light sources 120a and 120b using optical collimation and field pattern intensity control.

Table 1: Test data on HFCI uniformity

|  | Red | Green | Blue |
|---|---|---|---|
| **Avg** | 227.5 | 225.9 | 228.7 |
| **SD** | 4.9 | 4.4 | 7.1 |
| **Max** | 239 | 237 | 243 |
| **Min** | 214 | 217 | 217 |
| **Range** | 25 | 20 | 26 |
| **% Var** | 9 | 7 | 10 |

**% Var is the variation in intensity across the field of illumination (called uniformity).**

Example 2 - Adjusting current to equalize illumination at target surface points

Utilizing the system setup, as in Figure 6, the following values were measured:
$\theta_2$ = 40°, $\theta$ = 50°, HFIL = 140 mm, HFIW = 70 mm, LEDDia = 20 mm
Accordingly,

$$h = \sin\theta_2 \ (HFIW - LEDDia) = 46\,mm$$

$$h_T = 200mm, \ h_B = 200mm - h = 154mm, \ h_r = (200 \ mm + 154 \ mm)/2 = 177mm$$

$$r_T = \frac{h_T}{\sin\theta} = 311.1\,mm \ , \quad r_B = \frac{h_B}{\sin\theta} = 239.6\,mm \ , \quad r = \frac{h_r}{\sin\theta} = 275.4\,mm$$

It is desired for the illumination to be equal and even at surface points of the reagent card $S_T$, S and $S_B$, which implies that the top field $E_T$ = the bottom field $E_B$. When the current in the top field is set to 0.500 A, which by examination of the LED flux output vs. input current chart yields about 90 lumens (lm), thus top field

$$E_T = \frac{90\,lm\ \cos 50°}{(0.311m)^2} = 598\,{lm}\!\!\Big/\!\!_{m^2}$$

Now using this top field illumination value,

$$E_B = 598\,{lm}\!\!\Big/\!\!_{m^2} = \frac{I\,lm\ \cos 50°}{(0.2754m)^2}, \quad I\,lm = \frac{598\,{lm}\!\!\Big/\!\!_{m^2} \times (0.2754m)^2}{\cos 50°} = 70.6\,lm \ .$$

The Blue wavelength generally has a higher % variation, this is due in part to chromatic behavior differences in the taking lens, and the LED collimator lenses; the chromatic differences cause the Blue to bend more than the Green and Red wavelengths, by Snell's law:

$$n_1 \sin\theta_1 = n_2 \sin\theta_2 \ ,$$

the corresponding indices of refraction for Red, Green and Blue in glass (and plastic) are lower to higher indices respectively; n is smaller for longer wavelengths.

The advantages of the inventive concepts disclosed herein are many. Uniformity of the light level in the image rendered across the field of view is significantly improved as a result of unique collimation and shaping of the light source flux output: Test data shows the improvement to be 25 % or more. The light fall off property of a camera taking lens is spherical: light falls off in a non linear pattern across the field of view. The inventive concepts disclosed herein provide non linear correction by applying non linear light flux shaping. The need for digital correction to correct the light fall off in the image is eliminated. This provides a faster system response due to the elimination of computation operations on each pixel in light fall off correction algorithms. Additionally, color dynamic range (color depth) is restored in the analog domain due to increasing the light output spherically across the field of view before digital image quantization occurs. This is specifically critical in color reflectance spectrometry where the discrete quantized color values of each color Red, Green and Blue, are used in algorithms to determine the reaction response.

High output flux provides for a short camera integration exposure time which yields high speed stop action strobe capability. A polarizer can be used while maintaining a short exposure integration time. In turn, specular reflection reduction is achieved, however, they attenuate the light passing through them by 60% or more.

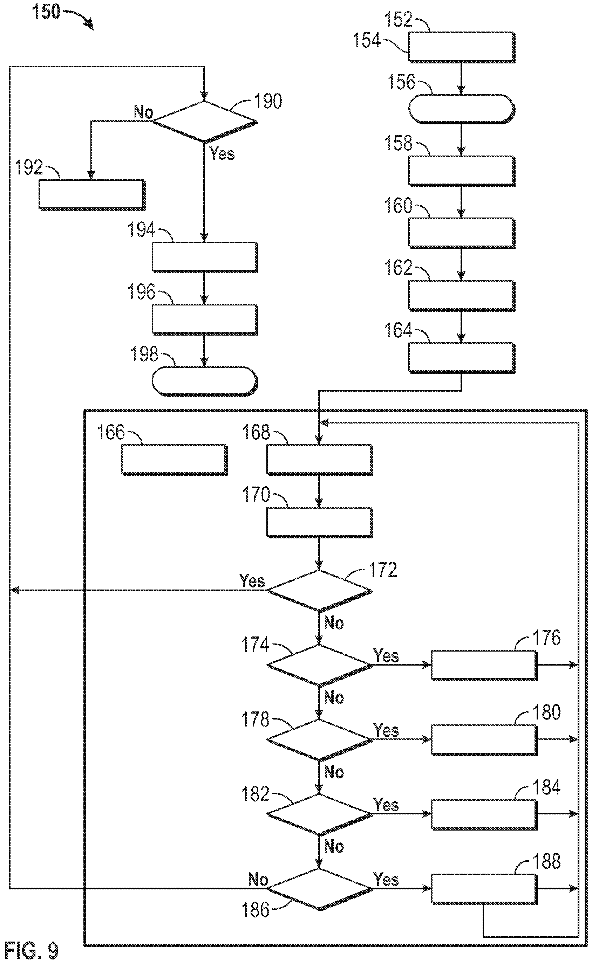

Referring to Figure 9, an exemplary embodiment of a method 150 that can be written as machine readable code stored in one or more non-transitory memory, such as random access memory, read only memory or the like is illustrated. The method 150 allows the device to get the RGB gain levels (by means of camera-chip register control adjustment) for white balance, and optimum FOV target light uniformity by adjusting LED upper and lower field intensity. The optics tailors the light in the left-to-right axis of the FOV image, and the field intensity top-to-bottom for the larger $1/r^2$ losses.

In a step 152 the camera and illumination intensity configuration can be stored in a non-volatile memory 154, which can be a registry, for example. The configuration can comprise a variety of baseline exposure parameters, such as pixel integration time, shutter width, and shutter delay, for one or more images. Baseline gains may be set, for red, green 1, green 2, and blue, for example. Baseline LED lamp drive currents may be set for first and second light sources 120a and 120b, for example. Further, baseline image crop origin, and baseline image size may also be set, for example.

Next, in a step 156, the image and illumination calibration may be started. In a step 158, the focus of the optical reader 126 may be adjusted by using a focusing target, for example. In a step 160, the polarizer 124 may be adjusted, such as by using a reflective target, for example. In a step 162, the camera rotation may be adjusted. In a step 164, the image position may be analyzed, and the crop origin parameters may be adjusted.

In a step 166, an automatic exposure adjustment may be carried out as follows: In a step 168, still images may be acquired while strobing illumination using calibration targets. In a step 170, the white balance image may be analyzed using fixed grid ROIs 13 pad-columns by 8-strip rows, to determine the average red-green-blue and SD of each ROI. In a decision step 172, it is determined if all attempts have been exhausted. If all attempts have not been exhausted, in a step 174 it is determined if the average green (Avg_G) is less than or equal to 203, OR greater than or equal to 207. If either condition is met, the exposure width parameter may be adjusted in step 176, and the method may cycle back to step 168. If all attempts have been exhausted, the method moves on to step 190 which will be discussed below.

If both conditions are not met, in a step 178 it is determined whether the average red (Avg_R) or average blue (Avg_B) are less than or equal to 195, OR greater than or equal to 215. If either condition is met, the method 150 branches to a step 180 wherein the red and blue gain values may be adjusted for gross white balance. The method 150 may then cycle back to step 168.

If both conditions are not met, in a step 182, it is determined if the uniformity is unacceptable. If the uniformity is unacceptable, the method 150 moves to step 184 where the LED drive current is adjusted. The method 150 then cycles back to step 168.

If the uniformity is acceptable, then in a step 186 it is determined whether Avg_R or Avg_B are less than or equal to 203, OR whether the Avg_R or Avg_B are greater than or equal to, 207. If either condition is met, the red and blue gain values may be adjusted for fine white balance in a step 188. The method may then cycle back to step 168. If both conditions are not met, the image passes and the method moves on to step 190.

In step 190, it is determined whether all white balance measures are passing. If not, then the method branches to a uniformity failure step 192, wherein an exposure adjustment may be retried, or a fault diagnostic tree may be followed.

If all white balance measures are passing, the method continues in a step 194 wherein the dark offset may be measured and validated.

In a step 196, the upper left and the upper right of a first reagent strip may be set. The method then ends in a success step 198.

As will be understood by persons of ordinary skill in the art, the method 150 may include the following uniformity rules: color average (gross) may be set to 205 +/- 10; color average (fine) may be set to 205 +/- 2; column uniformity may be set to R,G <15%, B <25%; overall uniformity may be set to R, G <20%, B <30%; optimum overall uniformity may be set to R, G, B ,15%, R-G (Difference) <5%, and B-G (Difference) <8%, for example.

Further, steps 178 and 186 may include logic to detect "ping-pong" between settings, for example. If changing gains by negative of previous gain adjustment, instead the exposure width based on Green channel difference should be changed by 1 count, for example.

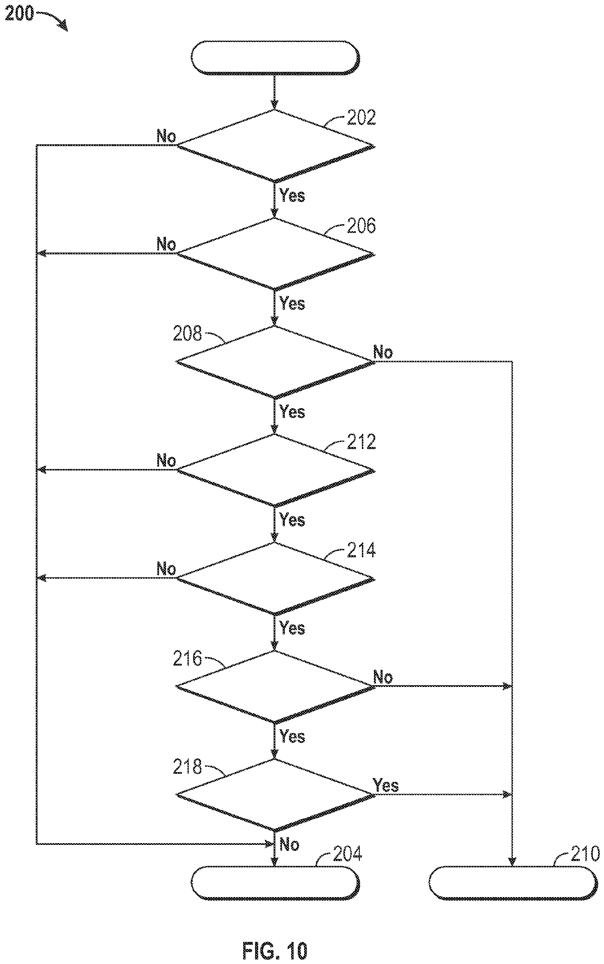

Referring now to Figure 10, shown therein is an example of a method and machine readable instructions 200 for RGB uniformity check according to an embodiment of the inventive concepts disclosed herein.

In a step 202, it is determined whether the overall red uniformity (Overall_R_Uniformity) is less than or equal to 25%; AND whether the overall green uniformity (Overall_G_Uniformity) is less than or equal to 25%; AND whether the overall blue uniformity (Overall_B_Uniformity) is less than or equal to 35%, for example.

If all three conditions are not met, unacceptable uniformity is returned in a step 204.

If all three conditions are met, in a step 206 it is determined whether all column Red uniformity (Column_R_Uniformity) is less than or equal to 18%; AND whether all column Green uniformity (Column G Uniformity) is less than or equal to 18%; AND whether all column Blue uniformity (Column_B_Uniformity) is less than, or equal to 30%, for example,

If all three conditions are not met, step 204 returns an unacceptable uniformity.

If all three conditions are met, in a step 208 it is determined if this is the first or second adjustment attempt.

If this is not the first or second adjustment attempt, an acceptable uniformity is returned in a step 210.

If this is the first or the second attempt, in a step 212 it is determined if the Overall_R_Uniformity is less than or equal to 20%; AND Overall_G_Uniformity is less than or equal to 20%; AND Overall_B_Uniformity is less than or equal to 30%.

If all three conditions are not met, then step 204 returns an unacceptable uniformity.

If all three conditions are met, in a step 214 it is determined whether Column R Uniformity is less than or equal to 15%; AND whether Column_G_Uniformity is less than or equal to 15%; AND whether Column_B_Uniformity is less than or equal to 25%.

If all three conditions are not satisfied, an unacceptable uniformity is returned in a step 204.

If all three conditions are satisfied, it is determined if this is the first adjustment attempt in a step 216.

If this is not the first adjustment attempt, an acceptable uniformity is returned in a step 210.

If this is the first adjustment attempt, in a step 218 it is determined if the Overall_R_Uniformity is less than or equal to 15%; AND if the Overall_G_Uniformity is less than or equal to 15%; AND if the Overall_B_Uniformity is less than or equal to 15%.

If all three conditions are met, an acceptable uniformity is returned in a step 210.

If all three conditions are not met, an unacceptable uniformity is returned in step 204.

The very low profile package having a very small thickness provides for placement in area constrained applications which is the case for many and most machine vision inspection subject target areas. Versatility is achieved by allowing for a large range of package mounting options. The inventive concepts disclosed herein also provide for coverage of a relatively large subject area of illumination. Optical assembly and alignment is easily achieved since no calibration or difficult tolerance management is required. The individually controllable illumination channels provide separate control of the light sources and output intensity balancing. Specifically, near and far field intensity control is achieved, i.e. the output of the far field can be set higher than the near field to improve falloff induced by the difference in near and far field distance to the target ( I cos / r^2 loss, see Figure 6 ). Uniformity can be balanced in applications that require having the illuminator set up as not perpendicular to the subject focal plane.

While the inventive concepts disclosed herein have been described in connection with the exemplary embodiments of the various figures, it is not limited thereto and it is to be understood that other similar embodiments may be used or modifications and additions may be made to the described embodiments for performing the same function of the inventive concepts disclosed herein without deviating therefrom. Therefore, the inventive concepts disclosed herein should not be limited to any single embodiment, but rather should be construed in breadth and scope in accordance with the appended claims.

**Claims**

1. An optical analysis system for uniform illumination and optical analysis of reagent test pads, said system being a medical diagnostic device, comprising:

   (a) a target surface (S) having a first surface point ($S_T$) and a second surface point ($S_B$);
   (b) an optical reader (126) having a field of view encompassing said target surface (S); and
   (c) an illuminator (116) for illuminating the target surface (S), said illuminator comprising

      (i) a base plate which is a printed circuit board;
      a first light source (120a) aimed at said first surface point ($S_T$) and disposed a first distance ($R_T$) from said first surface point ($S_T$), the first light source (120a) operatively coupled to a first control channel, the first light source (120a) comprising a first optical axis ($r_T$) aligned with the first surface point ($S_T$) such that the first distance ($R_T$) is measured along the first optical axis ($r_T$); and
      (ii) a second light source (120b) aimed at said second surface point ($S_B$) and disposed a second distance ($R_B$) from said second surface point ($S_B$), the second light source (120b) operatively coupled to a second control channel, the second light source (120b) comprising a second optical axis ($r_B$) aligned with the second surface point ($S_B$) such that the second distance ($R_B$) is measured along the second optical axis ($r_B$), **characterized in that**

      the illuminator (116) comprises said first light source (120a) and said second light source (120b) that are operatively coupled and mounted to said base plate angled relative to the field of view such that said first distance ($R_T$) and said second distance ($R_B$) are different; and
      luminous flux of white light of said first light source (120a) and said second light source (120b) are set such that the illumination at said first surface point ($S_T$) is substantially equivalent to the illumination at said second surface point ($S_B$), wherein the illumination is set by adjusting the current to either one or both of the first light source (120a) and the second light source (120b) and wherein adjusting the current is preprogrammed or the current is dynamically adjusted by a processor;
      the first light source (120a) comprises a light-emitting diode (LED), a first collimator lens (122a) mounted over the LED and a first linear polarizer (124a) disposed over the first collimator lens (122a),
      the second light source (120b) which comprises a light-emitting diode, a second collimator lens (122b) mounted over the LED and a second polarizer lens (124b) disposed over the second collimator lens (122b),
      a third linear polarizer (130) is disposed on the optical reader (126), and wherein the first linear polarizer (124a) and the third linear polarizer (130) are rotated at 90° relative to one another, the second linear polarizer (124b) and the third linear polarizer (130) are rotated at 90° relative to one another.

2. The optical analysis system of claim 1, wherein both of said first and second light sources (120a, 120b) are operatively coupled to the printed circuit board (118).

3. The optical analysis system of claim 1, wherein the processor executes a program logic including machine readable code, which causes the processor to:

   (a) determine the distance between said first light source (120a) and said first surface point ($S_T$) of said target surface (S) along a first optical axis ($r_T$) of said first light source (120a);
   (b) determine the distance between said second light source (120b) and said second surface point ($S_B$) of said target surface (S) along a second optical axis ($r_B$) of said second light source (120b); and
   (c) increase or decrease the current to at least one of said first or second light source (120a, 120b), such that illumination at said first surface point ($S_T$) is substantially equivalent to the illumination at said second surface point ($S_B$).

4. The optical analysis system of one of claims 1-3, wherein the first light source (120a) and the second light source (120b) are attached to a mounting surface angled at about 45° relative to the field of view.

5. The optical analysis system of one of claims 1-4, wherein the optical reader (126) is a CMOS imager or a digital camera.

6. A method of reducing a vignetting effect in a captured image, comprising:

providing an optical analysis system for uniform illumination and optical analysis of reagent test pads for medical diagnostics, comprising:

an optical reader (126) having a field of view encompassing said target surface (S) comprising a first surface point ($S_T$) and a second surface point ($S_B$) horizontally offset from the second surface point ($S_B$) along the field of view;

an illuminator (116) for illuminating the target surface (S), said illuminator comprising:

a first light source (120a) positioned a first distance ($R_T$) from the first surface point ($S_T$), the first light source (120a) comprising a first optical axis ($r_T$) aligned with the first surface point ($S_T$) such that the first distance ($R_T$) is measured along the first optical axis ($r_T$), the first light source (120a) operably connected to a first control channel and having a first luminous output; and

a second light source (120b) positioned a second distance ($R_B$) from the second surface point ($S_B$), the second light source (120b) comprising a second optical axis ($r_B$) aligned with the second surface point ($S_B$) such that the second distance ($R_B$) is measured along the second optical axis ($r_B$), the second light source (120b) operably connected to a second control channel and having a second luminous output, **characterized in that**

the illuminator (116) comprises said first light source (120a) and said second light source (120b) that are attached to a mounting surface angled relative to the field of view such that

the first distance ($R_T$) is different from the second distance ($R_B$), and the first luminous output is different from the second luminous output, such that the illumination at the first surface point ($S_T$) is substantially equivalent to the illumination at the second surface point ($S_B$) of the field of view, wherein the illumination is set by adjusting the current to either one or both of the first light source (120a) and the second light source (120b) and wherein adjusting the current is preprogrammed or the current is dynamically adjusted by a processor;

the first light source (120a) further comprises a light-emitting diode (LED), a first collimator lens (122a) mounted over the LED and a first linear polarizer (124a) disposed over the first collimator lens (122a),

the second light source (120b) further comprises a light-emitting diode (LED), a second collimator lens (122b) mounted over the LED and a second polarizer lens (124b) disposed over the second collimator lens (122b),

a third linear polarizer (130) is disposed on the optical reader (126), and wherein the first linear polarizer (124a) and the third linear polarizer (130) are rotated at 90° relative to one another, the second linear polarizer (124b) and the third linear polarizer (130) are rotated at 90° relative to one another,

the processor executing program logic which is operatively coupled to the first control channel and the second control channel to control the first luminous flux of the first light source (120a) and the second luminous flux of the second light source (120b);

determining the first distance ($R_T$) along a first optical axis ($r_T$) of the first light source (120a);

determining the second distance ($R_B$) along a second optical axis ($r_B$) of the second light source (120b); and

adjusting the luminous flux of at least one of the first light source (120a) and the second light source (120b), such that illumination at the first surface point ($S_T$) is substantially equivalent to the illumination at said second surface point ($S_B$).

**Patentansprüche**

1. Optisches Analysesystem zur gleichmäßigen Beleuchtung und optischen Analyse von Reagenztestkissen, wobei das System eine medizinische Diagnosevorrichtung ist und umfasst:

(a) eine Zielfläche (S) mit einem ersten Oberflächenpunkt ($S_T$) und einem zweiten Oberflächenpunkt ($S_B$) ;

(b) ein optisches Lesegerät (126) mit einem Sichtfeld, das die Zielfläche (S) umfasst; und

(c) eine Beleuchtungsquelle (116) zum Beleuchten der Zielfläche (S), wobei die Beleuchtungsquelle umfasst:

(i) eine Basisplatte, die eine gedruckte Leiterplatte ist;

eine erste Lichtquelle (120a), die auf den ersten Oberflächenpunkt ($S_T$) gerichtet und in einem ersten Abstand ($R_T$) vom ersten Oberflächenpunkt ($S_T$) angeordnet ist, wobei die erste Lichtquelle (120a) funktionell mit einem ersten Steuerkanal gekoppelt ist, und die erste Lichtquelle (120a) eine erste optische Achse ($r_T$) umfasst, die mit dem ersten Oberflächenpunkt (ST) ausgerichtet ist, derart dass der erste Abstand ($R_T$) entlang der ersten optischen Achse ($r_T$) gemessen wird; und

ii) eine zweite Lichtquelle (120b), die auf den zweiten Oberflächenpunkt ($S_B$) gerichtet und in einem zweiten Abstand ($R_B$) vom zweiten Oberflächenpunkt ($S_B$) abgeordnet ist, wobei die zweite Lichtquelle (120b) funktionell mit einem zweiten Steuerkanal gekoppelt ist, und die zweite Lichtquelle (120b) eine zweite optische Achse ($r_B$) umfasst, die mit dem zweiten Oberflächenpunkt ($S_B$) ausgerichtet ist, derart dass der zweite Abstand ($R_B$) entlang der zweiten optischen Achse ($r_B$) gemessen wird, **dadurch gekennzeichnet, dass**

die Beleuchtungsquelle (116) die erste Lichtquelle (120a) und die zweite Lichtquelle (120h) umfasst, die funktionell mit der Basisplatte gekoppelt und daran befestigt sind, die in Bezug auf das Sichtfeld abgewinkelt ist, derart dass
der erste Abstand (RT) und der zweite Abstand (RB) verschieden ist; und
der Lichtstrom von weißem Licht der ersten Lichtquelle (120a) und der zweiten Lichtquelle (120b) derart eingestellt ist, dass die Beleuchtung am ersten Oberflächenpunkt ($S_T$) im Wesentlichen der Beleuchtung am zweiten Oberflächenpunkt ($S_B$) entspricht, wobei die Beleuchtung durch Anpassen des Stroms zu einer oder beiden der ersten Lichtquelle (120a) und der zweiten Lichtquelle (20b) eingestellt wird, und wobei das Anpassen des Stroms vorprogrammiert ist oder der Strom von einem Prozessor dynamisch angepasst wird;
die erste Lichtquelle (120a) eine Leuchtdiode (LED), eine erste Kollimatorlinse (122a), die über der ersten LED montiert ist, und einen ersten Linearpolarisator (124a) umfasst, der über der ersten Kollimatorlinse (122a) angeordnet ist,
die zweite Lichtquelle (120b) eine Leuchtdiode, eine zweite Kollimatorlinse (122b), die über der zweiten LED montiert ist, und einen zweiten Linearpolarisator (124b) umfasst, der über der zweiten Kollimatorlinse (122b) angeordnet ist,
ein dritter Linearpolarisator (130) auf dem optischen Lesegerät (126) angeordnet ist, und wobei der erste Linearpolarisator (124a) und der zweite Linearpolarisator (130) um 90° relativ zueinander gedreht sind, und der zweite Linearpolarisator (124b) und der dritte Linearpolarisator (130) um 90° relativ zueinander gedreht sind.

2. Optisches Analysesystem nach Anspruch 1, wobei sowohl die erste als auch die zweite Lichtquelle (120a, 120b) funktionell mit der gedruckten Leiterplatte (118) gekoppelt sind.

3. Optisches Analysesystem nach Anspruch 1, wobei der Prozessor Programmlogik ausführt, die maschinenlesbaren Code umfasst, der den Prozessor veranlasst zum:

(a) Bestimmen des Abstands zwischen der ersten Lichtquelle (120a) und dem ersten Oberflächenpunkt ($S_T$) der Zielfläche (S) entlang einer ersten optischen Achse ($r_T$) der ersten Lichtquelle (120a);
(b) Bestimmen des Abstands zwischen der zweiten Lichtquelle (120b) und dem zweiten Oberflächenpunkt ($S_B$) der Zielfläche (S) entlang einer zweiten optischen Achse ($r_B$) der zweiten Lichtquelle (120b); und
(c) Erhöhen oder Herabsetzen des Stroms zu einer der ersten oder der zweiten Lichtquelle (120a, 120b), derart dass Beleuchtung des ersten Oberflächenpunkts ($S_T$) im Wesentlichen der Beleuchtung des zweiten Oberflächenpunkts ($S_B$) entspricht.

4. Optisches Analysesystem nach einem der Ansprüche 1 bis 3, wobei die erste Lichtquelle (120a) und die zweite Lichtquelle (120b) an einer Montagefläche befestigt sind, die um etwa 45° relativ zum Sichtfeld abgewinkelt ist.

5. Optisches Analysesystem nach einem der Ansprüche 1 bis 4, wobei das optische Lesegerät (126) ein CMOS-Bildgerät oder eine Digitalkamera ist.

6. Verfahren zur Verringerung eines Vignettierungseffekts in einem aufgenommenen Bild, umfassend:

Bereitstellen eines optischen Analysesystems zur gleichmäßigen Beleuchtung und optischen Analyse von Reagenztestkissen zur medizinischen Diagnose, umfassend:

ein optisches Lesegerät (126) mit einem Sichtfeld, das die Zielfläche (S) mit einem ersten Oberflächenpunkt ($S_T$) und einem zweiten Oberflächenpunkt ($S_B$) umfasst, horizontal versetzt vom zweiten Oberflächenpunkt ($S_B$) entlang des Sichtfeldes;
eine Beleuchtungsquelle (116) zum Beleuchten der Zielfläche (S), wobei die Beleuchtungsquelle umfasst:

eine erste Lichtquelle (120a), die in einem ersten Abstand ($R_T$) vom ersten Oberflächenpunkt ($S_T$)

positioniert ist, wobei die erste Lichtquelle (120a) eine erste optische Achse (r$_T$) umfasst, die mit dem ersten Oberflächenpunkt (S$_T$) ausgerichtet ist, derart dass der erste Abstand (R$_T$) entlang der ersten optischen Achse (r$_T$) gemessen wird, wobei die erste Lichtquelle (120a) funktionell mit einem ersten Steuerkanal gekoppelt ist und eine erste Leuchtausgabe aufweist; und

eine zweite Lichtquelle (120b), die in einem zweiten Abstand (R$_B$) vom zweiten Oberflächenpunkt (S$_B$) positioniert ist, wobei die zweite Lichtquelle (120b) eine zweite optische Achse (r$_B$) umfasst, die mit dem zweiten Oberflächenpunkt (S$_B$) ausgerichtet ist, derart dass der zweite Abstand (R$_B$) entlang der zweiten optischen Achse (r$_B$) gemessen wird, wobei die zweite Lichtquelle (120b) funktionell mit einem zweiten Steuerkanal gekoppelt ist und eine zweite Leuchtausgabe aufweist, **dadurch gekennzeichnet, dass**

die Beleuchtungsquelle (116) die erste Lichtquelle (120a) und die zweite Lichtquelle (120b) umfasst, die an einer Montagefläche befestigt sind, die in Bezug auf das Sichtfeld abgewinkelt ist, derart dass

der erste Abstand (R$_T$) vom zweiten Abstand (R$_B$) verschieden ist, und die erste Leuchtausgabe von der zweiten Leuchtausgabe verschieden ist, derart dass die Beleuchtung am ersten Oberflächenpunkt (S$_T$) im Wesentlichen der Beleuchtung am zweiten Oberflächenpunkt (S$_B$) des Sichtfeldes entspricht, wobei die Beleuchtung durch Anpassen des Stroms zu einer oder beiden der ersten Lichtquelle (120a) und der zweiten Lichtquelle (20b) eingestellt wird, und wobei das Anpassen des Stroms vorprogrammiert ist oder der Strom von einem Prozessor dynamisch angepasst wird,

die erste Lichtquelle (120a) ferner eine Leuchtdiode (LED), eine erste Kollimatorlinse (122a), die über der ersten LED montiert ist, und einen ersten Linearpolarisator (124a) umfasst, der über der ersten Kollimatorlinse (122a) angeordnet ist,

die zweite Lichtquelle (120b) ferner eine Leuchtdiode (LED), eine zweite Kollimatorlinse (122b), die über der zweiten LED montiert ist, und einen zweiten Linearpolarisator (124b) umfasst, der über der zweiten Kollimatorlinse (122b) angeordnet ist,

ein dritter Linearpolarisator (130) auf dem optischen Lesegerät (126) angeordnet ist, und wobei der erste Linearpolarisator (124a) und der zweite Linearpolarisator (130) um 90° relativ zueinander gedreht sind, und der zweiten Linearpolarisator (124b) und der dritte Linearpolarisator (130) um 90° relativ zueinander gedreht sind,

der Prozessor Programmlogik ausführt, die mit dem ersten Steuerkanal und dem zweiten Steuerkanal gekoppelt ist, um den ersten Lichtstrom der ersten Lichtquelle (120a) und den zweiten Lichtstrom der zweiten Lichtquelle (120b) zu steuern;

Bestimmen des ersten Abstands (R$_T$) entlang einer ersten optischen Achse (r$_T$) der ersten Lichtquelle (120a);
Bestimmen des zweiten Abstands (R$_B$) entlang einer zweiten optischen Achse (r$_B$) der zweiten Lichtquelle (120b); und
Anpassen des Lichtstroms mindestens einer der ersten Lichtquelle (120a) und der zweiten Lichtquelle (120b), derart dass Beleuchtung am ersten Oberflächenpunkt (S$_T$) im Wesentlichen der Beleuchtung am zweiten Oberflächenpunkt (S$_B$) entspricht.

**Revendications**

1. Système d'analyse optique pour l'éclairage uniforme et l'analyse optique de tampons de test de réactifs, ledit système étant un dispositif de diagnostic médical, comprenant :

(a) une surface cible (S) ayant un premier point de surface (S$_T$) et un deuxième point de surface (S$_B$) ;
(b) un lecteur optique (126) ayant un champ de vision englobant ladite surface cible (S) ; et
(c) un dispositif d'éclairage (116) pour illuminer la surface cible (S), ledit dispositif d'éclairage comprenant

(i) une plaque de base qui est une carte de circuit imprimé ;
une première source de lumière (120a) visant ledit premier point de surface (S$_T$) et disposée à une première distance (R$_T$) dudit premier point de surface (S$_T$), la première source de lumière (120a) étant couplée de manière opérationnelle à un premier canal de commande, la première source de lumière (120a) comprenant un premier axe optique (r$_T$) aligné avec le premier point de surface (S$_T$) de sorte que la première distance (R$_T$) est mesurée le long du premier axe optique (r$_T$) ; et
(ii) une deuxième source de lumière (120b) visant ledit deuxième point de surface (S$_B$) et disposée à une deuxième distance (R$_B$) dudit deuxième point de surface (S$_B$), la deuxième source de lumière (120b) étant couplée de manière opérationnelle à un deuxième canal de commande, la deuxième source de lumière (120b) comprenant un deuxième axe optique ($r_B$) aligné avec le deuxième point de surface ($S_B$) de sorte que la deuxième distance ($R_B$) est mesurée le long du deuxième axe optique ($r_B$), **caractérisé en ce que**

le dispositif d'éclairage (116) comprend ladite première source de lumière (120a) et ladite deuxième source de lumière (120b) qui sont couplées de manière opérationnelle et montées sur ladite plaque de base en formant un angle par rapport au champ de vision de sorte que

ladite première distance ($R_T$) et ladite deuxième distance ($R_B$) sont différentes ; et

un flux lumineux de lumière blanche de ladite première source de lumière (120a) et de ladite deuxième source de lumière (120b) est réglé de telle sorte que l'éclairage au niveau dudit premier point de surface ($S_T$) est sensiblement équivalent à l'éclairage au niveau dudit deuxième point de surface ($S_B$), dans lequel l'éclairage est réglé en ajustant le courant vers l'une ou l'autre ou les deux de la première source de lumière (120a) et de la deuxième source de lumière (120b) et dans lequel l'ajustement du courant est préprogrammé ou le courant est dynamiquement ajusté par un processeur ;

la première source de lumière (120a) comprend une diode électroluminescente (DEL), une première lentille de collimateur (122a) montée sur la DEL et un premier polariseur linéaire (124a) disposé sur la première lentille de collimateur (122a),

la deuxième source de lumière (120b) qui comprend une diode électroluminescente, une deuxième lentille de collimateur (122b) montée sur la DEL et une deuxième lentille de polariseur (124b) disposée sur la deuxième lentille de collimateur (122b),

un troisième polariseur linéaire (130) est disposé sur le lecteur optique (126), et dans lequel le premier polariseur linéaire (124a) et le troisième polariseur linéaire (130) sont tournés à 90° l'un par rapport à l'autre, le deuxième polariseur linéaire (124b) et le troisième polariseur linéaire (130) sont tournés à 90° l'un par rapport à l'autre.

2. Système d'analyse optique selon la revendication 1, dans lequel les deux dites première et deuxième sources de lumière (120a, 120b) sont couplées de manière opérationnelle à la carte de circuit imprimé (118).

3. Système d'analyse optique selon la revendication 1, dans lequel le processeur exécute une logique de programme comprenant un code lisible par machine, qui amène le processeur à :

(a) déterminer la distance entre ladite première source de lumière (120a) et ledit premier point de surface ($S_T$) de ladite surface cible (S) le long d'un premier axe optique ($r_T$) de ladite première source de lumière (120a) ;
(b) déterminer la distance entre ladite deuxième source de lumière (120b) et ledit deuxième point de surface ($S_B$) de ladite surface cible (S) le long d'un deuxième axe optique ($r_B$) de ladite deuxième source de lumière (120b) ; et
(c) augmenter ou diminuer le courant vers au moins l'une desdites première ou deuxième source de lumière (120a, 120b), de sorte que l'éclairage au niveau dudit premier point de surface ($S_T$) est sensiblement équivalent à l'éclairage au niveau dudit deuxième point de surface ($S_B$).

4. Système d'analyse optique selon l'une des revendications 1 à 3, dans lequel la première source de lumière (120a) et la deuxième source de lumière (120b) sont fixées à une surface de montage inclinée à environ 45° par rapport au champ de vision.

5. Système d'analyse optique selon l'une des revendications 1 à 4, dans lequel le lecteur optique (126) est un imageur CMOS ou une caméra numérique.

6. Procédé de réduction d'un effet de vignettage dans une image capturée, comprenant les étapes consistant à :
fournir un système d'analyse optique pour un éclairage uniforme et une analyse optique de tampons de test de réactifs pour des diagnostics médicaux, comprenant :

un lecteur optique (126) ayant un champ de vision englobant ladite surface cible (S) comprenant un premier point de surface ($S_T$) et un deuxième point de surface ($S_B$) décalé horizontalement du deuxième point de surface ($S_B$) le long du champ de vision ; un dispositif d'éclairage (116) pour illuminer la surface cible (S), ledit dispositif d'éclairage comprenant :
une première source de lumière (120a) positionnée à une première distance ($R_T$) du premier point de surface ($S_T$), la première source de lumière (120a) comprenant un premier axe optique ($r_T$) aligné avec le premier point de surface ($S_T$) de sorte que la première distance ($R_T$) est mesurée le long du premier axe optique ($r_T$), la première source de lumière (120a) étant connectée de manière opérationnelle à un premier canal de commande et ayant une première sortie lumineuse ; et

une deuxième source de lumière (120b) positionnée à une deuxième distance ($R_B$) du deuxième point de surface ($S_B$), la deuxième source de lumière (120b) comprenant un deuxième axe optique ($r_B$) aligné avec le deuxième point de surface ($S_B$) de sorte que la deuxième distance ($R_B$) est mesurée le long du deuxième axe optique ($r_B$), la deuxième source de lumière (120b) étant connectée de manière opérationnelle à un deuxième canal de commande et ayant une deuxième sortie lumineuse, **caractérisé en ce que**

le dispositif d'éclairage (116) comprend ladite première source de lumière (120a) et ladite deuxième source de lumière (120b) qui sont fixées à une surface de montage inclinée par rapport au champ de vision de sorte que la première distance ($R_T$) est différente de la deuxième distance ($R_B$), et la première sortie lumineuse est différente de la deuxième sortie lumineuse, de sorte que l'éclairage au niveau du premier point de surface ($S_T$) est sensiblement équivalent à l'éclairage au niveau du deuxième point de surface ($S_B$) du champ de vision, dans lequel l'éclairage est réglé en ajustant le courant vers l'une ou l'autre ou les deux de la première source de lumière (120a) et de la deuxième source de lumière (120b) et dans lequel l'ajustement du courant est préprogrammé ou le courant est dynamiquement ajusté par un processeur ;

la première source de lumière (120a) comprend en outre une diode électroluminescente (DEL), une première lentille de collimateur (122a) montée sur la DEL et un premier polariseur linéaire (124a) disposé sur la première lentille de collimateur (122a),

la deuxième source de lumière (120b) comprend en outre une diode électroluminescente (DEL), une deuxième lentille de collimateur (122b) montée sur la DEL et une deuxième lentille de polariseur (124b) disposée sur la deuxième lentille de collimateur (122b),

un troisième polariseur linéaire (130) est disposé sur le lecteur optique (126), et dans lequel le premier polariseur linéaire (124a) et le troisième polariseur linéaire (130) sont tournés à 90° l'un par rapport à l'autre, le deuxième polariseur linéaire (124b) et le troisième polariseur linéaire (130) sont tournés à 90° l'un par rapport à l'autre,

le processeur exécute une logique de programme qui est couplée de manière opérationnelle au premier canal de commande et au deuxième canal de commande pour commander le premier flux lumineux de la première source de lumière (120a) et le deuxième flux lumineux de la deuxième source de lumière (120b) ;

déterminer la première distance ($R_T$) le long d'un premier axe optique ($r_T$) de la première source de lumière (120a) ;

déterminer la deuxième distance ($R_B$) le long d'un deuxième axe optique ($r_B$) de la deuxième source de lumière (120b) ; et

ajuster le flux lumineux d'au moins un élément parmi la première source de lumière (120a) et la deuxième source de lumière (120b), de telle sorte que l'éclairage au niveau du premier point de surface ($S_T$) soit sensiblement équivalent à l'éclairage au niveau dudit deuxième point de surface ($S_B$).

$$E_1 = \frac{I_1 \cos(\theta)}{r_1^2}$$

$$E_2 = \frac{I_2 \cos(\theta)}{r_2^2}$$

**FIG. 1**

**FIG. 2**

110

112

114

FIG. 3
(Prior Art)

FIG. 4A

FIG. 4B

FIG. 5

$$E_{illum} \, lm/m^2 = \frac{Ilm \cos(q)}{r^2}$$

$$680lm = 1Watt$$

FIG. 6

FIG. 7

FIG. 8

EP 2 691 759 B1

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008130643 A1
- WO 2008130643 A
- US 4755058 A
- US 5518689 A
- US 5654803 A
- EP 1566629 A1
- US 5877863 A
- WO 2010059537 A1